# FASCICULE DE BREVET EUROPEEN

(11) **EP 3 904 045 B1**
(45) Date de publication et mention de la délivrance du brevet: **11.01.2023**
(21) Numéro de dépôt: 21170936.5
(22) Date de dépôt: 28.04.2021
(51) Int. Cl.: B29C 49/42, B08B 5/02, B29C 49/28, F15B 13/04, F15B 13/07, F16K 11/085

(54) **DISPOSITIF DE DEPOUSSIERAGE DE L'INTERIEUR D'UNE PREFORME**
VORRICHTUNG ZUM ENTSTAUBEN DES INNEREN EINER VORFORM
DEVICE FOR REMOVING DUST FROM THE INSIDE OF A PREFORM

(30) Priorité: 29.04.2020 FR 2004276
(43) Date de publication de la demande: 03.11.2021
(73) Titulaire: Sidel Participations, 76930 Octeville-sur-Mer (FR)
(72) Inventeur: TROUILLET, Mikael, 76930 Octeville-sur-Mer (FR); QUETEL, François, 76930 Octeville-sur-Mer (FR)
(74) Mandataire: Sidel Group

(56) Documents cités:
- DE-A1- 10 240 852
- FR-A1- 2 937 889
- FR-A1- 3 054 474
- US-A1- 2019 249 787

## Description

### Domaine technique de l'invention

L'invention concerne un dispositif de dépoussiérage de l'intérieur de préformes comportant :
- un carrousel rotatif embarquant des organes de maintien de préformes ;
- un tube d'insufflation monté coulissant sur le carrousel au moyen d'un vérin pneumatique, le vérin pneumatique comportant une première chambre de travail.

### Arrière-plan technique

On connaît de l'état de la technique des exemples de dispositif de dépoussiérage de l'intérieur d'au moins une préforme en matière thermoplastique par insufflation d'air sous pression. De tels dispositifs selon l'état de la technique sont décrits dans les documents FR3054474A1, FR2937889A1 et US2019/249787 A1.

De manière connue, les préformes en matière thermoplastique sont destinées à la fabrication de récipients, tels que des bouteilles, flacons, pots etc.

Les préformes sont généralement fabriquées par moulage par injection de matière thermoplastique préalablement à leur transformation en récipients, généralement sur autre site industriel. Les préformes sont alors transportées en vrac de leur site de fabrication jusqu'à celui de leur transformation et le plus souvent stockées sur chacun d'eux.

Par conséquent, on a pu constater que différents types de poussières étaient alors susceptibles de pénétrer à l'intérieur des préformes. Par « poussières », on entend de manière non limitative de fines particules de matière, tels que des grains de poussières mais encore des morceaux d'emballage comme du carton, etc. ou de matière thermoplastique notamment mais non exclusivement sous la forme de filaments.

On connait de l'état de la technique l'utilisation d'un dispositif de dépoussiérage pour traiter des récipients obtenus à partir de préformes. Toutefois, les performances d'un tel dispositif ne sont pas satisfaisantes du fait de l'importance du volume d'un récipient par comparaison à celui d'une préforme. C'est la raison pour laquelle, on utilise avantageusement un dispositif de dépoussiérage pour éliminer les poussières présentes à l'intérieur des préformes. Le dispositif de dépoussiérage des préformes est par exemple agencé en amont du four.

Pour fabriquer des récipients, on rappelle que les préformes sont conditionnées thermiquement dans un four afin de ramollir la matière du corps en chauffant à une température permettant ensuite sa transformation, par soufflage ou par étirage-soufflage, dans un des moules d'une unité de moulage.

Pour ce faire, le dispositif de dépoussiérage comporte des moyens d'insufflation constitués par des tubes qui sont aptes à insuffler de l'air comprimé à l'intérieur de la préforme et qui sont associés à des moyens d'aspiration aptes à évacuer hors de la préforme simultanément l'air insufflé et les poussières. Le tube d'insufflation est monté mobile en translation par rapport à la préforme, coulissant axialement entre une position extrême escamotée et une position extrême insérée dans laquelle au moins une partie du tube est reçue à l'intérieur de la préforme.

Dans les dispositifs de dépoussiérage selon l'état de la technique, le coulissement des tubes d'insufflation entre leurs deux positions extrêmes est généralement commandé par des moteurs électriques linéaires qui sont commandés par un codeur en fonction de la position angulaire du carrousel.

De tels moteurs électriques sont onéreux. De plus, il peut arriver qu'une dérive de la commande par codeur entraîne un décalage de la commande des tubes d'insufflation entre leurs positions extrêmes. Cela implique de réaliser régulièrement un étalonnage de la machine.

### Résumé de l'invention

L'invention propose un dispositif de dépoussiérage de l'intérieur de préformes en matière thermoplastique par insufflation de gaz de dépoussiérage qui comporte :
- un carrousel monté rotatif autour d'un axe central de rotation sur un socle fixe, le carrousel embarquant des organes de maintien de préformes ;
- des tubes d'insufflation dont chacun est monté coulissant sur le carrousel en correspondance avec chaque organe de maintien entre une position extrême escamotée, et une position extrême insérée à l'intérieur d'une préforme destinée à être portée par l'organe de maintien associé ;
- au moins un vérin pneumatique pour commander au moins un tube d'insufflation entre ses deux positions extrêmes et qui est piloté automatiquement en fonction de la position angulaire du carrousel, le vérin pneumatique comportant au moins une première chambre de travail pour la commande du tube d'insufflation dans une première de ses positions extrêmes ;
caractérisé en ce que le dispositif de dépoussiérage comporte un distributeur fluidique tournant qui comporte :
- un stator interne qui est monté fixe par rapport au socle, et qui comporte une canalisation de pression raccordée à une source de gaz de travail et au moins une canalisation de mise à l'échappement ;
- un rotor externe qui est monté rotatif autour du stator coaxialement à l'axe central de manière solidaire avec le carrousel et qui comporte au moins une première lumière d'actionnement qui est raccordée à la première chambre de travail, la lumière d'actionnement parcourant une trajectoire circulaire autour de l'axe central ;
- un premier étage de pilotage relié à la première chambre de travail du vérin comportant :
   -- une chambre de pression qui est interposée radialement entre le stator et le rotor, et qui est raccordée à la canalisation de pression, la lumière d'actionnement débouchant dans la chambre de pression sur au moins un premier secteur angulaire de sa trajectoire circulaire, dit "secteur angulaire d'actionnement" ;
   -- une chambre d'échappement qui est interposée radialement entre le stator et le rotor, et qui est raccordée à la canalisation d'échappement, la lumière d'actionnement débouchant dans la chambre d'échappement sur au moins un deuxième secteur angulaire de sa trajectoire circulaire, dit "secteur angulaire d'échappement" ;
   -- des parois radiales de séparation de la chambre de pression et de la chambre d'échappement.

Selon d'autres caractéristiques de l'invention :
- le stator comporte un noyau qui est équipé de la canalisation de pression et de la canalisation d'échappement, et une bague de pilotage qui est interposée entre le noyau et le rotor et qui est fixée sur le noyau, la bague de pilotage comportant les parois radiales de séparation ;
- une des deux chambres de pression ou d'échappement, dite chambre externe, est délimitée radialement entre un premier segment de face cylindrique externe de la bague et le rotor ;
- la chambre externe est délimitée axialement par deux rebords de la bague de pilotage ;
- une des deux chambres, dite chambre interne, est délimitée radialement entre un deuxième segment de face cylindrique interne de la bague de pilotage et le noyau, le segment de face cylindrique interne étant équipé d'une pluralité d'orifices traversants répartis sur sa longueur à hauteur de la lumière d'actionnement pour faire communiquer la chambre interne avec la lumière d'actionnement ;
- la chambre interne forme la chambre d'échappement, tandis que la chambre externe forme la chambre de pression ;
- le vérin pneumatique est un vérin à double action qui comporte une deuxième chambre de travail pour commander le tube d'insufflation dans une deuxième de ses positions extrêmes, le rotor comportant au moins une deuxième lumière d'actionnement qui est raccordée à la deuxième chambre de travail, la deuxième lumière d'actionnement étant décalée axialement par rapport à la première lumière d'actionnement, le distributeur fluidique tournant comportant un deuxième étage de pilotage relié à la deuxième chambre de travail du vérin pneumatique comportant :
   -- une chambre de pression qui est interposée radialement entre le stator et le rotor, et qui est raccordée à la canalisation de pression, la deuxième lumière d'actionnement débouchant dans la chambre de pression sur au moins un premier secteur angulaire de sa trajectoire circulaire, dit "secteur angulaire d'actionnement" ;
   -- une chambre d'échappement qui est interposée radialement entre le stator et le rotor, et qui est raccordée à la canalisation d'échappement, la deuxième lumière d'actionnement débouchant dans la chambre d'échappement sur au moins un deuxième secteur angulaire de sa trajectoire circulaire, dit "secteur angulaire d'échappement" ;
   -- des parois radiales de séparation de la chambre de pression et de la chambre d'échappement ;
- le deuxième étage de pilotage commande comporte une bague de pilotage similaire à celle du premier étage de pilotage ;
- la chambre d'échappement du premier étage de pilotage s'étend en coïncidence avec la chambre de pression du deuxième étage de pilotage, tandis que la chambre de pression du premier étage de pilotage s'étend en coïncidence avec la chambre d'échappement du deuxième étage de pilotage ;
- chaque bague de pilotage est montée de manière remplaçable de manière à pouvoir régler l'étendue angulaire des chambres en changeant la bague de pilotage.

### Brève description des figures

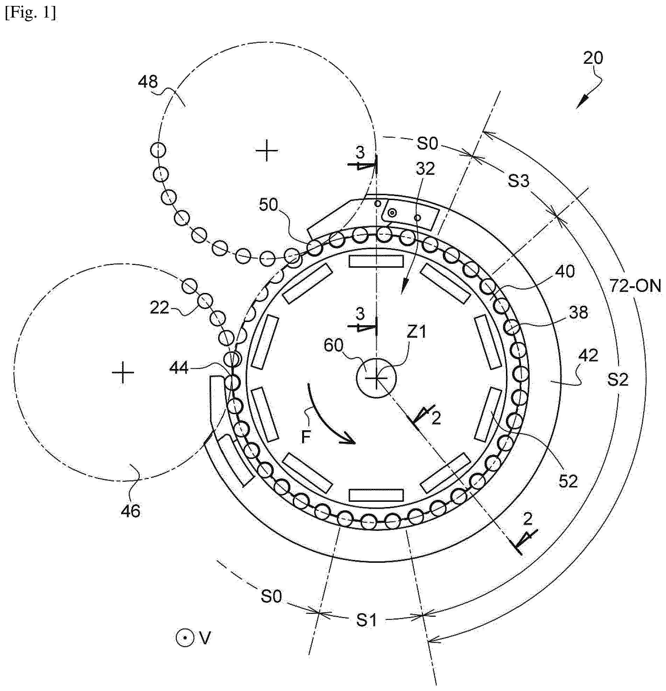

D'autres caractéristiques et avantages de l'invention apparaitront au cours de la lecture de la description détaillée qui va suivre pour la compréhension de laquelle on se reportera aux dessins annexés dans lesquels :
[fig-1] La figure 1 est une vue de dessus qui représente schématiquement un dispositif de dépoussiérage réalisé selon les enseignements de l'invention ;
[fig.2] La figure 2 est une vue en coupe axiale selon le plan de coupe 2-2 de la figure 1 qui représente un poste de dépoussiérage comportant une tube d'insufflation commandé par un vérin pneumatique dans sa position extrême insérée ;
[fig.3] La figure 3 est une vue en coupe axiale selon le plan de coupe 3-3 de la figure 1 qui représente un poste de dépoussiérage comportant une tube d'insufflation commandé par un vérin pneumatique dans sa position extrême escamotée ;
[fig.4] La figure 4 est une vue en perspective à plus grande échelle qui représente un distributeur fluidique tournant réalisé selon les enseignements de l'invention qui est installé au centre du dispositif de dépoussiérage de la figure 1 ;
[fig.5] La figure 5 est une vue en coupe axiale selon le plan de coupe 5-5 de la figure 4 qui représente les différents étages du dispositif fluidique tournant ;
[fig.6] La figure 6 est une vue en coupe horizontale selon le plan de coupe 6-6 de la figure 4 qui représente l'étage de dépoussiérage du distributeur fluidique tournant ;
[fig.7] La figure 7 est une vue en perspective qui représente une bague de dépoussiérage qui équipe l'étage de dépoussiérage du distributeur fluidique tournant pour commander l'ouverture et la fermeture de lumières de dépoussiérage ;
[fig.8] La figure 8 est une vue en coupe horizontale selon le plan de coupe 8-8 de la figure 4 qui représente un premier étage de pilotage du distributeur fluidique tournant ;
[fig.9] La figure 9 est une vue en perspective qui représente une première bague de pilotage qui équipe le premier étage de pilotage du distributeur fluidique tournant pour commander la circulation de gaz de travail dans des lumières d'actionnement ;
[fig.10] La figure 10 est une vue en coupe horizontale selon le plan de coupe 10-10 de la figure 4 qui représente un deuxième étage de pilotage du distributeur fluidique tournant ;
[fig.11] La figure 11 est un schéma fluidique qui représente la circulation du gaz de travail dans un poste de dépoussiérage du dispositif de dépoussiérage lorsque ce dernier fonctionne dans un mode normal ;
[fig.12] La figure 12 est un schéma fluidique qui représente la circulation du gaz de travail dans un poste de dépoussiérage du dispositif de dépoussiérage lorsque ce dernier fonctionne dans un mode sécurisé.

### Description détaillée de l'invention

Dans la suite de la description, des éléments présentant une structure identique ou des fonctions analogues seront désignés par une même référence.

Dans la suite de la description, on adoptera à titre non limitatif une orientation verticale parallèle à l'axe "Z1" central du carrousel 32 et dirigée de bas en haut selon la flèche "V" des figures. On adoptera aussi des orientations radiales dirigées radialement depuis l'axe "Z1" central du carrousel 32 vers l'extérieur, et des orientations tangentielles dirigées orthogonalement aux orientations radiales et axiales. Le terme "circonférentiel" sera utilisé pour désigner un déplacement ou un élément s'étendant en arc de cercle centré sur l'axe "Z1" central du carrousel 32.

On a représenté à la figure 1 un dispositif 20 de dépoussiérage de l'intérieur d'une préforme 22 en matière thermoplastique.

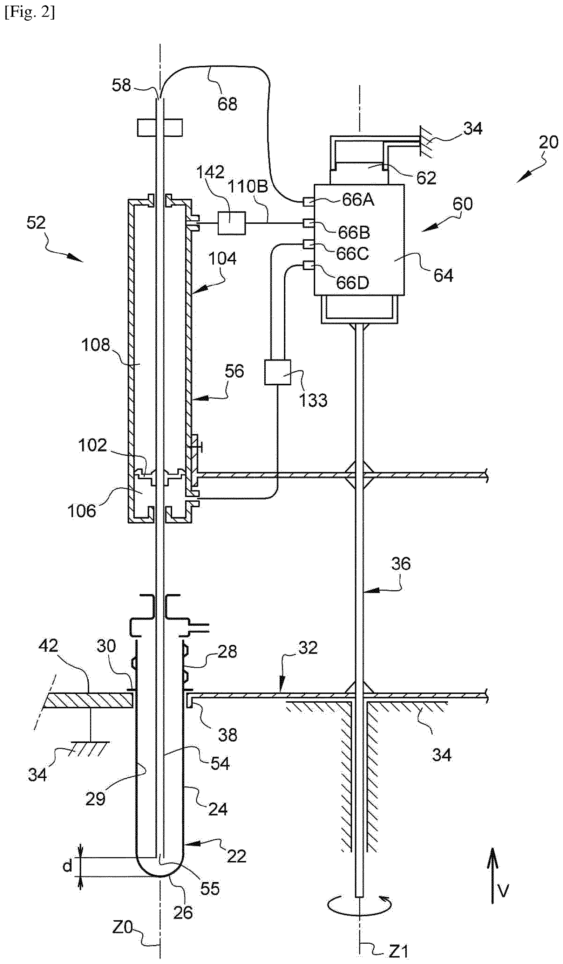

Une telle préforme 22 est représentée à la figure 2. Elle est réalisée en matériau thermoplastique, ici en polyéthylène téréphtalate (PET). Elle est classiquement obtenue par moulage par injection. Elle présente une forme sensiblement axisymétrique autour d'un axe "Z0" principal d'orientation verticale.

Comme représenté à la figure 2, elle présente un corps 24 cylindrique à paroi tubulaire fermé à son extrémité inférieure par un fond 26, et qui est prolongé à son extrémité supérieure par un col 28 ouvert verticalement vers le haut, lui aussi tubulaire. Une face 29 interne de la paroi délimite l'intérieur de la préforme 22. Le col 28 est généralement injecté de manière à posséder déjà sa forme définitive tandis que le corps 24 de la préforme 22 est destiné à subir une déformation relativement importante pour former le récipient final lors d'une étape ultérieure de formage.

Le col 28 de la préforme 22 comporte aussi une collerette 30 annulaire qui fait saillie radialement. La collerette 30 est ici agencée à la jonction entre la base du col 28 et le corps 24.

Le dispositif 20 de dépoussiérage comporte un carrousel 32 monté rotatif autour d'un axe "Z1" central vertical sur un socle 34 fixe. Le socle 34 est fixe par rapport au sol sur lequel repose le dispositif 20 de dépoussiérage.

Le carrousel 32 est plus particulièrement entraîné en rotation continue, ici dans un sens antihoraire comme indiqué par la flèche F de la figure 1, par un arbre 36 vertical d'axe "Z1" central, par exemple au moyen d'un moteur électrique non représenté.

Le carrousel 32 embarque des organes 38 de maintien des préformes 22 afin d'entraîner les préformes 22 en file le long d'une trajectoire commune en arc de cercle centrée sur l'axe "Z1" central. Les organes 38 de maintien sont ici formés par des encoches en forme de demi-cercle réalisées en périphérie extérieure d'une couronne 40. La couronne 40 est montée fixe sur le carrousel 32. Chaque organe 38 de maintien permet de loger la partie du corps 24 de la préforme 22 située juste au-dessous de la collerette 30, tandis que la collerette 30 repose sur une face supérieure de la couronne 40 permettant ainsi d'entraîner la préforme 22 le long de sa trajectoire.

Pour empêcher les préformes 22 de tomber sous l'effet de la force centrifuge lors de la rotation du carrousel 32, un rail 42 arqué, fixe par rapport au socle 34, est agencé le long de la trajectoire en arc de cercle des préformes 22. Les préformes 22 glissent ainsi le long du rail 42 qui permet de la retenir radialement à l'intérieur de leurs organes 38 de maintien associé.

La couronne 40 comporte par exemple trente-deux ou quarante organes 38 de maintien répartis régulièrement à sa périphérie. Le dispositif 20 de dépoussiérage est conçu pour permettre de transporter et de dépoussiérer un grand débit de préformes 22, par exemple de l'ordre de 60000 préformes par heure.

Comme représenté à la figure 1, les préformes 22 sont acheminées jusqu'à une entrée 44 du dispositif 20 de dépoussiérage par une roue 46 d'entrée schématisée par un cercle à la figure 1. Les préformes 22 sont transférée, après dépoussiérage, sur une roue 48 de sortie schématisée par un cercle à la figure 1, au niveau d'une sortie 50. Les roues 46, 48 d'entrée et de sortie sont par exemple des roues à encoches présentant des organes 38 de maintien similaires à ceux décrits pour le carrousel 32. Entre l'entrée 44 et la sortie 50, la trajectoire des préformes 22 s'étend ici sur un secteur angulaire supérieur à 180°, par exemple de l'ordre de 300°.

Le carrousel 32 est aussi équipé de plusieurs postes 52 de dépoussiérage qui permettent de dépoussiérer les préformes 22 pendant leur transport depuis l'entrée 44 jusqu'à la sortie 50. Chaque poste 52 de dépoussiérage est embarqué sur le carrousel 32, c'est-à-dire que chaque poste 52 de dépoussiérage est entraîné en rotation autour de l'axe "Z1" central solidairement avec le carrousel 32.

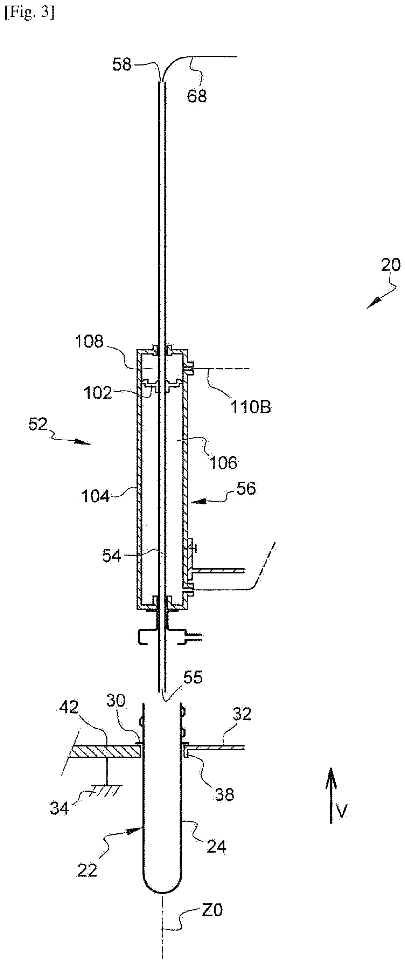

Comme cela est représenté aux figures 2 et 3, chaque poste 52 de dépoussiérage comporte au moins un tube 54 d'insufflation qui est embarqué sur le carrousel 32. Chaque tube 54 d'insufflation est agencé verticalement en correspondance avec un organe 38 de maintien associé. Ainsi, le carrousel 32 comporte autant de tube 54 d'insufflation que d'organe 38 de maintien.

Chaque tube 54 d'insufflation présente une extrémité inférieure libre qui est munie d'une buse 55 d'insufflation et une extrémité supérieure munie d'un orifice 58 d'alimentation qui est destinée à être raccordée à une source (non représentée) de gaz de dépoussiérage sous pression, comme cela sera expliqué plus en détails par la suite. Le gaz de dépoussiérage est par exemple formé par de l'air. La pression du gaz de dépoussiérage est par exemple de l'ordre de 7 bars.

Chaque tube 54 d'insufflation est monté coulissant verticalement sur le carrousel 32 entre une position extrême escamotée verticalement vers le haut, comme représentée à la figure 3, et une position extrême insérée inférieure comme représentée à la figure 2.

En position extrême insérée, un tronçon d'extrémité inférieur rectiligne vertical du tube 54 d'insufflation est destiné à être inséré à l'intérieur d'une préforme 22 portée par l'organe 38 de maintien associé par son col 28. Le tube 54 d'insufflation est ici coaxial à l'axe "Z0" principal de ladite préforme 22. Dans cette position extrême insérée, la buse 55 d'insufflation est agencée à une faible distance "d" du fond 26 de la préforme 22.

En position extrême escamotée, le tube 54 d'insufflation est entièrement extrait de la préforme 22 portée par l'organe 38 de maintien associé pour permettre le transfert d'une préforme 22 dépoussiérée vers la roue 48 de sortie radialement vers l'extérieur et la réception d'une nouvelle préforme 22 venant de la roue 46 d'entrée radialement vers l'intérieur de l'organe 38 de maintien.

Le coulissement de chaque tube 54 d'insufflation est commandé par au moins un vérin 56 pneumatique qui est piloté automatiquement en fonction de la position angulaire du carrousel 32. Dans le mode de réalisation représenté aux figures, chaque poste 52 de dépoussiérage comporte un unique vérin 56 pneumatique qui permet de commander simultanément le coulissement de tous les tubes 54 d'insufflation dudit poste 52 de dépoussiérage.

Lors du fonctionnement du dispositif 20 de dépoussiérage dans un mode normal, chaque tube 54 d'insufflation parcourt une trajectoire circulaire divisée d'amont en aval en plusieurs secteurs angulaires fixes par rapport au socle 34 qui ont été représenté à la figure 1. On décrit le fonctionnement du dispositif 20 de dépoussiérage en mode normal pour un tube 54 d'insufflation, la description étant applicable à chacun des tubes 54 d'insufflation.

Le long d'un premier secteur angulaire, appelé par la suite secteur "S0" angulaire escamoté, le tube 54 d'insufflation occupe sa position extrême escamotée. Le long de ce premier secteur "S0" angulaire escamoté, chaque préforme 22 est réceptionnée dans un des organes 38 de maintien à l'entrée 44 alors que le tube 54 d'insufflation associé demeure dans sa position supérieure escamotée.

Le carrousel 32 poursuit sa rotation, amenant le tube 54 d'insufflation jusqu'à un deuxième secteur angulaire, appelé par la suite secteur "S1" angulaire d'insertion, le long duquel le tube 54 d'insufflation se déplace depuis sa position extrême escamotée jusqu'à sa position extrême insérée. Ce secteur "S1" angulaire d'insertion s'étend par exemple sur environ 25°.

Lorsque le tube 54 d'insufflation atteint sa position extrême insérée, il entre dans un troisième secteur angulaire de sa trajectoire, appelé par la suite secteur "S2" angulaire inséré, le long duquel chaque tube 54 d'insufflation demeure dans sa position extrême insérée. La buse 55 d'insufflation émet un jet continu de gaz de dépoussiérage sous pression qui chasse les poussières contenues dans la préforme 22 à l'extérieur en remontant le long de la face 29 interne de la préforme 22 jusqu'au col 28. Les poussières chassées à l'extérieur de la préforme 22 sont ensuite récoltées par un aspirateur à poussière (non représenté) pour éviter de polluer les autres préformes 22. Le secteur "S2" angulaire inséré s'étend par exemple sur environ 120°.

Lorsque le tube 54 d'insufflation atteint un quatrième secteur angulaire, appelé par la suite secteur "S3" angulaire d'escamotage, le tube 54 d'insufflation se déplace depuis sa position extrême insérée jusqu'à sa position extrême escamotée. Ce secteur "S3" angulaire d'escamotage s'étend par exemple sur environ 25°.

Lorsque le tube 54 d'insufflation atteint sa position extrême escamotée, il revient dans le secteur "S0" angulaire escamoté de sa trajectoire. Le tube 54 d'insufflation atteint sa position extrême escamotée avant que la préforme 22 n'atteigne la sortie 50 afin de permettre le transfert de la préforme 22 ainsi dépoussiérée vers la roue 48 de sortie.

Les tubes 54 d'insufflation peuvent être alimentés en gaz de dépoussiérage par tous moyens connus. Les tubes 54 d'insufflation peuvent souffler du gaz de dépoussiérage en permanence ou seulement sur certains secteurs angulaires de leur course.

Chaque vérin 56 pneumatique est piloté automatiquement en fonction de la position angulaire du carrousel 32. En se reportant à la figure 2, le vérin 56 pneumatique comporte un piston 102 qui commande la montée et la descente du ou des tubes 54 d'insufflation associés. Le vérin 56 pneumatique comporte aussi un cylindre 104 dans lequel le piston 102 est monté coulissant verticalement entre une première position extrême supérieure correspondant à la position extrême escamotée des tubes 54 d'insufflation associés, comme représentée à la figure 3, et une position extrême inférieure correspondant à la position extrême insérée des tubes 54 d'insufflation associés, comme représentée à la figure 2.

Une première chambre 108 de travail pour la commande du vérin 56 pneumatique dans une première de ses positions extrêmes est délimitée entre le piston 102 et une des extrémités verticales du cylindre 104. La première chambre 108 de travail commande ici la descente du tube 54 d'insufflation vers sa position extrême insérée.

S'agissant ici d'un vérin 56 pneumatique à double effet, le vérin 56 pneumatique comporte aussi une deuxième chambre 106 de travail pour la commande du vérin 56 pneumatique dans une deuxième de ses positions extrêmes qui est délimitée entre le piston 102 et l'autre des extrémités verticales du cylindre 104. La deuxième chambre 106 de travail commande ici la montée du tube 54 d'insufflation vers sa position extrême escamotée.

En variante, le vérin pneumatique est un vérin simple effet. En ce cas, le vérin pneumatique ne comporte qu'une seule chambre de travail pour commander le coulissement du piston dans une de ses positions extrêmes, le piston étant commandé dans l'autre de ses positions extrêmes par un organe de rappel élastique tel qu'un ressort.

Chaque chambre 106, 108 de travail du vérin 56 pneumatique est alimentée en gaz de travail sous pression par une source qui est fixe par rapport au sol. Pour permettre d'acheminer le gaz de travail depuis la source fixe jusqu'à chaque chambre 106, 108 de travail du vérin 56 pneumatique, le dispositif 20 de dépoussiérage comporte un distributeur 60 fluidique tournant comportant au moins un premier étage 60B, 60C de pilotage. Chaque étage 60B, 60C de pilotage est associé à l'une des chambres 106, 108 de travail du vérin 56 pneumatique.

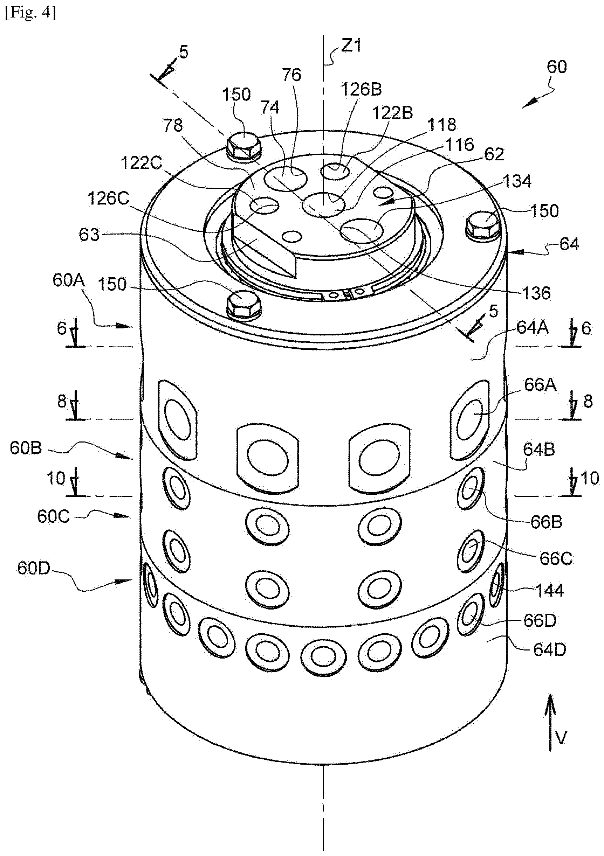

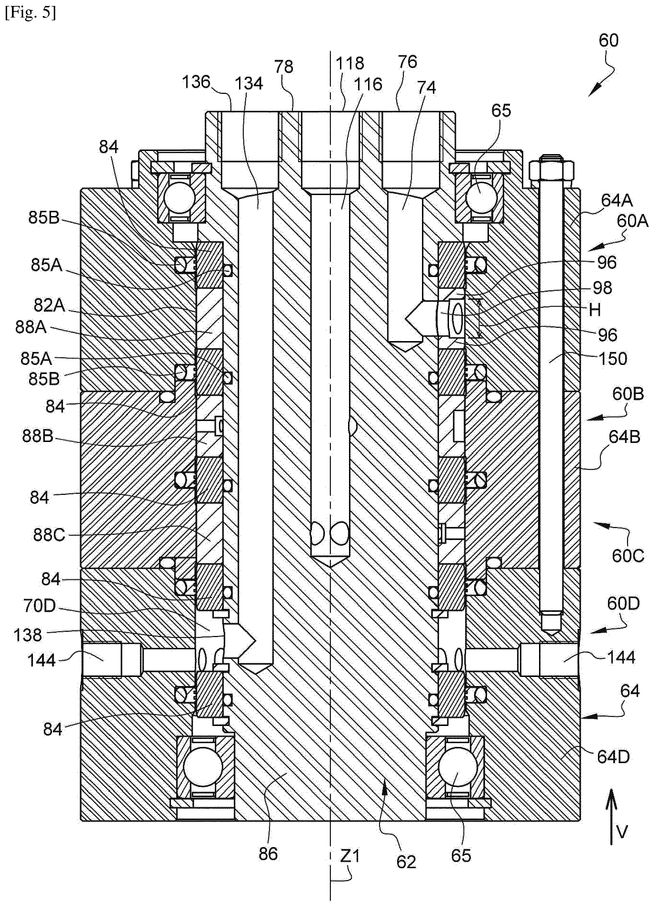

Comme représenté plus en détails aux figures 4 et 5, un tel distributeur 60 fluidique tournant comporte un stator 62 interne. Le stator 62 est monté fixe par rapport au socle 34. Le stator 62 est aligné avec l'axe "Z1" central. Le stator 62 est monté fixe par rapport au socle 34, par exemple au moyen de méplats 63 coopérant avec un dispositif antirotation (non représenté) pour bloquer sa rotation par rapport au socle 34. Le stator 62 présente ici une forme globalement cylindrique coaxiale avec l'axe "Z1" central.

Il comporte aussi un rotor 64 externe. Le rotor 64 externe présente une forme de manchon d'axe vertical. Le rotor 64 est monté rotatif autour du stator 62 coaxialement à l'axe "Z1" central. Le rotor 64 est solidaire en rotation avec le carrousel 32.

Des paliers 65 de guidage en rotation du rotor 64 sont interposés radialement entre le rotor 64 et le stator 62. Le distributeur 60 fluidique tournant comporte ici deux paliers 65 de guidage qui sont agencés à chacune de ses extrémités verticales.

Il s'agit ici de paliers 65 de roulement. En variante non représentée de l'invention, il s'agit de paliers lisses.

Les références liées aux éléments appartenant au premier étage 60B de pilotage seront indiquées par le suffixe "B".

Comme représenté aux figures 4, 5 et 8, pour former le premier étage 60B de pilotage, le rotor 64 comporte au moins une première lumière 66B d'actionnement qui est ici raccordée à l'une des chambres 106, 108 de travail du vérin 56 pneumatique par l'intermédiaire d'une conduite 110B. La lumière 66B d'actionnement parcourt ainsi une trajectoire circulaire autour de l'axe "Z1" central. A titre non limitatif, le premier étage 60B de pilotage est ici associé à la première chambre 108 de travail pour commander les tubes 54 d'insufflation vers leur position extrême insérée.

Chaque poste 52 de dépoussiérage comporte un vérin 56 pneumatique. Le premier étage 60B de pilotage du rotor 64 comporte ainsi dix lumières 66B d'actionnement qui sont agencées au même niveau et qui sont réparties régulièrement autour d'un même tronçon du rotor 64, les lumières 66B étant réparties selon un pas angulaire régulier. Les dix lumières 66B d'actionnement sont plus particulièrement identiques de manière que le tronçon de rotor 64 les contenant présente une symétrie de rotation autour de l'axe "Z1" central.

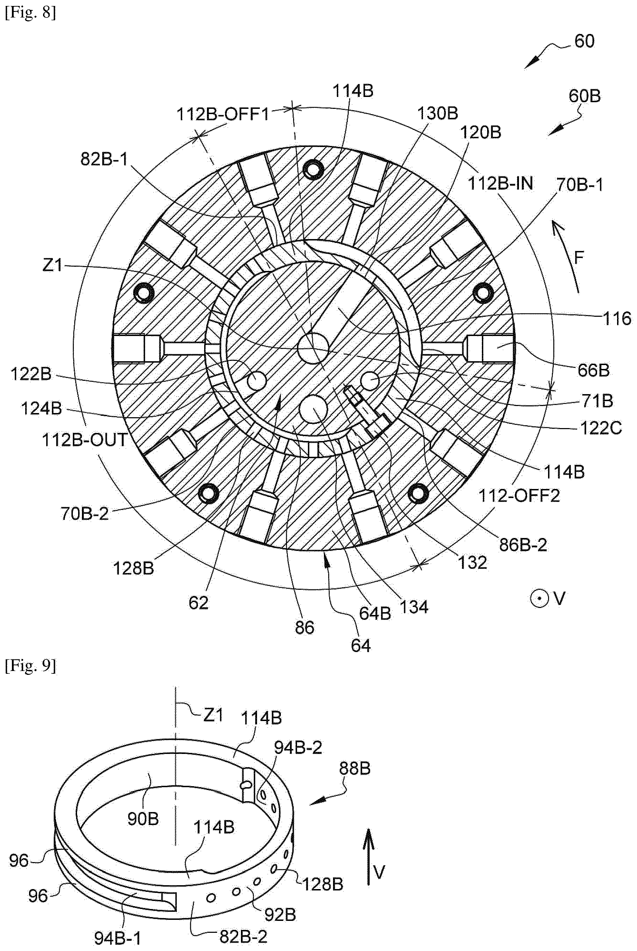

Comme représenté à la figure 8, le premier étage 60B de pilotage comporte une chambre 70B-1 de pression qui est interposée radialement entre le stator 62 et le rotor 64 au niveau de la lumière 66B d'actionnement. Ainsi, la lumière 66B d'actionnement est susceptible de déboucher par une ouverture 71B interne dans la chambre 70B-1 de pression sur un premier secteur angulaire de sa trajectoire circulaire, dit "secteur angulaire 112B-IN d'actionnement".

Le premier étage 60B de pilotage comporte aussi une chambre 70B-2 d'échappement qui est interposée radialement entre le stator 62 et le rotor 64 au niveau des lumières 66B d'actionnement. Ainsi, la lumière 66B d'actionnement est susceptible de déboucher par son ouverture 71B interne dans la chambre 70B-2 d'échappement sur un deuxième secteur angulaire de sa trajectoire circulaire, dit "secteur 112B-OUT angulaire d'échappement".

La chambre 70B-1 de pression et la chambre 70B-2 d'échappement sont ainsi agencées au même niveau sur le distributeur 60 fluidique tournant. Ceci permet avantageusement de gagner de la place par rapport à un distributeur fluidique tournant dans lequel la chambre de pression et la chambre d'échappement associées à une même chambre de travail seraient agencées sur deux niveaux différents du distributeur fluidique tournant.

Le secteur 112B-IN angulaire d'actionnement et le secteur 112B-OUT angulaire d'échappement sont deux secteurs angulaires distincts qui ne se chevauchent pas. Des cloisons 114B radiales de séparation sont prévues pour isoler la chambre 70B-1 de pression de la chambre 70B-2 d'échappement.

Les chambres 70B-1, 70B-2 de pression et d'échappement s'étendent sur une hauteur "H" verticale commune qui est sensiblement égale ou légèrement supérieure à la hauteur de l'ouverture 71B interne de la lumière 66B d'actionnement. Dans le mode de réalisation représenté aux figures, l'ouverture 71B interne de la lumière 66B d'actionnement présente une section circulaire. La hauteur des chambres 70B-1, 70B-2 de pression et d'échappement est ici légèrement supérieure au diamètre de l'ouverture interne.

L'étanchéité des chambres 70B-1, 70B-2 de pression et d'échappement est assurée verticalement dans les deux sens par deux bagues 84 intercalaires qui sont interposées radialement entre le rotor 64 et le stator 62. Les bagues 84 intercalaires sont ici montées fixes par rapport au stator 62 et glissants par rapport au rotor 64.

Chaque bague 84 intercalaire est ici réalisée en un matériau métallique. Un joint 85A intérieur annulaire d'étanchéités en matériau élastomères est intercalé radialement entre le stator 62 et la bague 84 intercalaire, d'une part, et un joint 85B extérieur annulaire d'étanchéité est intercalé radialement entre le rotor 64 et la bague 84 intercalaire, d'autre part. Le joint 85B extérieur d'étanchéité est en appui radial glissant sur la face cylindrique externe de la bague 84 intercalaire. Les faces cylindriques interne et externe de la bague 84 intercalaire présentent un état de surface suffisamment lisse pour garantir verticalement l'étanchéité de la chambre 70B-1 de pression et de la chambre 70B-2 d'échappement.

Le stator 62 comporte une canalisation 116 de pression qui alimente la chambre 70B-1 de pression en gaz de travail comprimé. La canalisation 116 de pression relie plus particulièrement au moins un orifice 118 amont formé dans la face 78 d'extrémité, ici supérieure, du stator 62 à au moins un orifice 120B aval d'alimentation de la chambre 70B-1 de pression. L'orifice 120B aval débouche ici radialement vers l'extérieur au même niveau que les lumières 66B d'actionnement. A titre d'exemple, le stator 62 comporte ici un unique orifice 118 amont et un unique orifice 120B aval d'alimentation de la chambre 70B-1 de pression. La canalisation 116 de pression est ici formée d'une unique conduite coudée qui comporte un tronçon globalement vertical qui est raccordée à l'orifice 118 amont, et un tronçon radial qui est raccordé à l'orifice 120 aval.

Le stator 62 comporte en outre une canalisation 122B d'échappement qui permet d'évacuer le gaz de travail sous pression contenu dans la chambre 70B-2 d'échappement. La canalisation 122B d'échappement relie plus particulièrement au moins un orifice 124B amont qui débouche dans la chambre 70B-2 d'échappement au moins à au moins un orifice 126B aval formé dans la face 78 d'extrémité, ici supérieure, du stator 62. L'orifice 124B amont débouche ici radialement vers l'extérieur au même niveau que les lumières 66B d'actionnement. A titre d'exemple, le stator 62 comporte ici un unique orifice 124B amont et un unique orifice 126B aval. La canalisation 122B d'échappement est ici formée d'une unique conduite coudée qui comporte un tronçon globalement radial qui est raccordée à l'orifice 124B amont, et un tronçon vertical qui est raccordé à l'orifice 126B aval.

Le gaz qui s'échappe par la canalisation 122B d'échappement, bien que présentant une pression inférieure à la pression du gaz de travail entrant par la conduite d'alimentation, présente toujours une pression supérieure à la pression atmosphérique.

Le premier étage 60B de pilotage du stator 62 comporte deux faces 82B-1, 82B-2 d'obturation fixes qui obturent chaque lumière 66B d'actionnement sur des secteurs 112B-OFF1, 112B-OFF2 angulaires intermédiaire de leur trajectoire circulaire.

Le premier secteur 112B-OFF1 angulaire intermédiaire est intercalé circonférentiellement entre le secteur 112B-IN angulaire d'actionnement et le secteur 112B-OUT angulaire d'échappement selon le sens de rotation du rotor 64 indiqué par la flèche "F" de la figure 8. Le deuxième secteur 112B-OFF2 angulaire intermédiaire est intercalé circonférentiellement entre le secteur 112B-OUT angulaire d'échappement et le secteur 112B-IN angulaire d'actionnement selon le sens de rotation du rotor 64 indiqué par al flèche "F" de la figure 8.

A cet effet, chaque face 82B-1, 82B-2 d'obturation présente une forme de segment cylindrique qui s'étend circonférentiellement sur ledit secteur angulaire intermédiaire autour de l'axe "Z1" central du stator 62. Dans le mode de réalisation représenté aux figures, la première face 82B-1 d'obturation, qui correspond au secteur 112B-OFF1 angulaire intermédiaire situé juste avant le secteur "S3" angulaire d'escamotage, s'étend sur un angle très inférieur à la deuxième face 82B-2 d'obturation, qui correspond au secteur 112B-OFF2 angulaire intermédiaire qui est situé juste avant le secteur "S1" angulaire d'insertion. Par exemple, le premier secteur 112B-OFF1 angulaire intermédiaire s'étend sur 20° tandis que le deuxième secteur 112B-OFF2 angulaire intermédiaire s'étend sur 60°.

Un jeu radial fonctionnel est réservé entre chaque face 82B-1, 82B-2 d'obturation et le rotor 64 pour permettre la rotation du rotor 64 sans frottement. Cependant, ce jeu est suffisamment faible pour que le débit de gaz de travail susceptible d'atteindre les lumières 66B d'actionnement obturées par les faces 82B-1, 82B-2 d'obturation soit négligeable.

Dans l'exemple représenté aux figures, le stator 62 est réalisé en plusieurs éléments distincts. Le stator 62 comporte ainsi un noyau 86 qui est équipé de la canalisation 116 de pression et de la canalisation 122B d'échappement. Le noyau 86 présente une forme cylindrique et il est agencé au centre du stator 62.

Le stator 62 comporte en outre un élément rapporté et fixé sur le noyau 86 qui comporte les faces 82B-1, 82B-2 d'obturation et les cloisons 114B de séparation. Comme représenté à la figure 9, l'élément rapporté est ici formé par une bague, dite première bague 88B de pilotage, qui est interposée radialement entre le noyau 86 du stator 62 et le rotor 64. La première bague 88B de pilotage est délimitée verticalement par une face supérieure annulaire plane et par une face inférieure annulaire plane et elle est délimitée radialement par une face 90B cylindrique interne et par une face 92B cylindrique externe.

La première bague 88B de pilotage est reçue de manière ajustée autour du noyau 86. Avantageusement, la première bague 88B de pilotage n'est pas reçue serrée autour du noyau 86, mais elle est reçue avec un jeu radial permettant son coulissement vertical pour permettre son montage et son démontage de manière aisée.

Une des deux chambres 70B-1, dite chambre externe, est ici délimitée radialement entre un segment de la face 92B externe de la première bague 88B de pilotage et le rotor 64. A cet effet, la face 92B externe comporte, sur ledit segment, un logement 94B-1 concave. Le reste de la face 92B externe présente une surface cylindrique lisse. Le logement 94B-1 concave est par exemple délimité verticalement par deux rebords 96.

En variante, le logement concave s'étend sur toute la hauteur de la première bague de pilotage.

La pression à l'intérieur des deux chambres 70B-1, 70B-2 est destinées à être très différente. Ainsi, la pression dans la chambre 70B-1 de pression est destinée à être très supérieure à celle de la chambre 70B-2 d'échappement. Si les deux chambres étaient réalisées de la même manière que la chambre 70B-1 externe, le gaz de travail serait susceptible de passer à travers le jeu fonctionnel réservé entre au moins l'une des faces 82B-1, 82B-2 d'obturation et le rotor 64, par exemple à travers le jeu fonctionnel délimité entre la première face 82B-1 d'obturation et le rotor 64 qui s'étend sur un secteur 112B-OFF1 angulaire intermédiaire plus court que le deuxième secteur 112B-OFF2 angulaire intermédiaire. Une partie non négligeable du gaz de travail arrivant par la canalisation 116 de pression repartirait ainsi directement par la canalisation 122B d'échappement. Pour éviter une telle fuite, il est proposé de réduire la section de passage entre les deux chambres 70B-1, 70B-2 à travers le jeu fonctionnel.

Pour ce faire, l'autre des deux chambres 70B-2, dite chambre interne, est délimitée radialement entre un deuxième segment de face 90B cylindrique interne de la première bague 88B et le noyau 86. A cet effet, la face interne comporte, sur ledit segment, un logement 94B-2 concave. Ledit logement 94B-2 s'étend ici sur toute la hauteur de la première bague 88B de pilotage.

Pour faire communiquer la chambre 70B-2 interne avec les lumières 66B d'actionnement sur le secteur 112B-OUT angulaire d'échappement, le segment de face 92B cylindrique externe est équipé d'une pluralité d'orifices 128B traversants répartis sur sa longueur au niveau de la lumière 66B. Ainsi, la section de passage entre les deux chambres 70B-1, 70B-2 est réduites à la somme des sections des orifices 128B traversants. La dimension et la quantité des orifices traversants reste cependant suffisante pour permettre l'échappement du gaz de travail contenu dans la première chambre 108 de travail associée en direction de la chambre 70B-2 d'échappement sur le secteur angulaire d'échappement.

Les orifices 128B traversants présentent par exemple une section circulaire de diamètre légèrement inférieure à celui de l'ouverture 71B interne d'une lumière 66B d'actionnement. Les orifices 128B traversants sont par exemple répartis régulièrement le long de la chambre 70B-2 interne selon un pas angulaire deux fois inférieur au pas angulaire défini entre deux lumières 66B d'actionnement adjacentes.

La chambre 70B-2 interne est séparée circonférentiellement de la chambre 70B-1 externe par les cloisons 114B de séparation radiales qui portent chacune l'une des faces 82B-1, 82B-2 d'obturation.

La chambre 70B-2 interne forme ici la chambre 70B-2 d'échappement, tandis que la chambre 70B-1 externe forme la chambre 70B-1 de pression.

En variante non représentée de l'invention, la chambre interne forme la chambre de pression, tandis que la chambre externe forme la chambre d'échappement.

La première bague 88B de pilotage est destinée à être fixée autour du noyau 86 au niveau des lumières 66B d'actionnement et au niveau de l'orifice 120B aval de la canalisation 116 de pression et de l'orifice 124B amont de la canalisation 122B d'échappement. La première bague 88B de pilotage est traversée radialement d'un conduit 130B qui permet de faire communiquer l'orifice 120B aval de la canalisation 116 de pression avec l'intérieur de la chambre 70B-1 de pression. Le conduit 130B est ici agencé au milieu du logement dans le sens circonférentiel. L'orifice 124B amont de la canalisation 122B d'échappement débouche quant à lui directement dans le logement délimitant la chambre 70B-2 d'échappement.

La première bague 88B de pilotage est montée de manière interchangeable sur le noyau 86 de manière à pouvoir régler l'étendue des secteurs 112B-IN, 112B-OFF1, 112B-OUT, 112B-OFF2 angulaires en remplaçant la première bague 88B de pilotage actuelle par une bague de pilotage de remplacement présentant des chambres 70B-1, 70B-2 de pression et d'échappement s'étendant sur des secteurs angulaires différents.

La première bague 88B de pilotage est par exemple fixée au noyau 86 par l'intermédiaire d'une vis 132 de fixation.

En variante non représentée, la première bague de pilotage est par exemple solidarisée en rotation avec le noyau par des moyens par emboîtement vertical de forme complémentaire tels qu'un méplat ou des cannelures. La première bague de pilotage est ensuite immobilisée verticalement au moyen des bagues intercalaires.

La première bague 88B de pilotage est ici réalisée en un matériau plastique rigide. La première bague 88B de pilotage est par exemple réalisée par moulage.

En variante, la bague de pilotage est réalisée en un matériau métallique.

S'agissant ici d'un vérin 56 pneumatique à double action, le distributeur 60 fluidique tournant comporte un deuxième étage 60C de pilotage qui est presque identique au premier étage 60B de pilotage. Le deuxième étage 60C de pilotage comporte ainsi des lumières 66C d'actionnement identiques à celles du premier étage 60B de pilotage, mais elles sont raccordées à la deuxième chambre 106 de travail du vérin 56 pneumatique associé.

La lumière 66C d'actionnement du deuxième étage 60C de pilotage est décalée verticalement par rapport à la lumière 66B d'actionnement du premier étage 60B de pilotage. Chaque lumière 66C d'actionnement du deuxième étage 60C de pilotage est ici alignée verticalement sur avec la lumière 66B d'actionnement du premier étage 60B de pilotage qui est associée au même poste 52 de dépoussiérage.

Cependant, le deuxième étage 60C de pilotage diffère du premier étage 60B de pilotage en ce que la position des chambres 70C-1, 70C-2 de pression et d'échappement sont modifiées afin que la chambre 70B-1 de pression du premier étage 60B de pilotage soit en coïncidence avec la chambre 70C-2 d'échappement du deuxième étage 60C de pilotage, tandis que la chambre 70B-2 d'échappement du premier étage 60B de pilotage est en coïncidence avec la chambre 70C-1 de pression du deuxième étage 60C de pilotage. Ainsi, le secteur 112C-IN angulaire d'actionnement du deuxième étage 60C de pilotage coïncide avec le secteur 112B-OUT angulaire d'échappement du premier étage 60B de pilotage, tandis que le secteur 112C-OUT angulaire d'échappement du deuxième étage 60C de pilotage coïncide avec le secteur 112B-IN angulaire d'actionnement du premier étage 60B de pilotage.

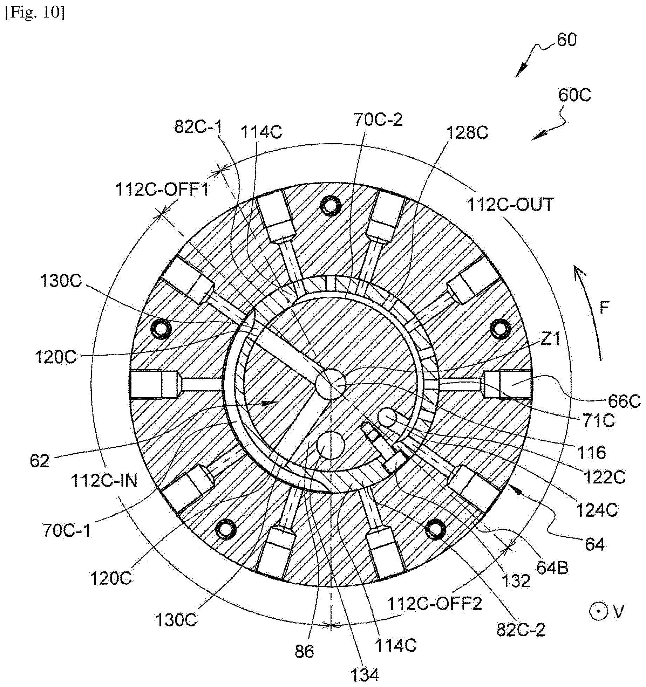

La description du premier 60B étage de pilotage effectuée précédemment est ainsi applicable au deuxième étage 60C de pilotage. On se reportera à la figure 10 sur laquelle on a remplacé le suffixe "B" des références par le suffixe "C".

Le deuxième étage 60C de pilotage est ici agencé verticalement au-dessous du premier étage 60B de pilotage.

La chambre 70C-1 de pression du deuxième étage 60C de pilotage est ici alimentée par la même canalisation 116 de pression. Ainsi, le tronçon globalement vertical de la conduite coudée formant la canalisation 116 de pression est commun aux deux étages 60B, 60C de pilotage et il alimente un deuxième tronçon radial qui est raccordé à deux orifices 120C aval qui alimentent la chambre 70C-1 de pression du deuxième étage 60C de pilotage.

En revanche, le deuxième étage 60C de pilotage comporte une canalisation 122C d'échappement distincte de la canalisation 122B d'échappement associée au premier étage 60B de pilotage. Les deux canalisations 122B, 122C d'échappement ne communiquent pas entre elles à l'intérieur du noyau 86.

Le deuxième étage 60C de pilotage comporte aussi une bague 88C de pilotage similaire à celle du premier étage 60B de pilotage. La bague 88C de pilotage du deuxième étage 60C de pilotage est identique à la bague 88B de pilotage qui est représentée à la figure 9 en retournant la bague, c'est-à-dire en inversant la direction de la flèche "V".

Par ailleurs, la source de gaz de dépoussiérage étant fixe par rapport au sol, pour permettre d'acheminer le gaz de dépoussiérage jusqu'à chaque tube 54 d'insufflation, le distributeur 60 fluidique tournant comporte un étage 60A de dépoussiérage.

Les différents étages 60A, 60B, 60C sont superposés verticalement. L'étage 60A de dépoussiérage est ici agencé à l'extrémité supérieure du distributeur 60 fluidique tournant.

Comme représenté aux figures 4, 5 et 6, pour former l'étage 60A de dépoussiérage, le rotor 64 comporte au moins une lumière 66A de dépoussiérage le traversant radialement. La lumière 66A de dépoussiérage est raccordée à au moins un tube 54 d'insufflation par l'intermédiaire d'une conduite 68 souple. La lumière 66A de dépoussiérage parcourt ainsi une trajectoire circulaire autour de l'axe "Z1" central.

Chaque lumière 66A de dépoussiérage est ici alignée verticalement avec les lumières 66B, 66C d'actionnement associées au même poste 52 de dépoussiérage.

Chaque lumière 66A de dépoussiérage est ici raccordée à un poste 52 de dépoussiérage. Chaque poste 52 de dépoussiérage comporte ici quatre tubes 54 d'insufflation. Ainsi une même lumière 66A de dépoussiérage permet d'alimenter simultanément quatre tubes 54 d'insufflation consécutifs du dispositif 20 de dépoussiérage. Le dispositif 20 de dépoussiérage représenté à la figure 1 comporte ainsi quarante tubes 54 d'insufflation qui sont portés par groupes de quatre par chacun de dix postes 52 de dépoussiérage. Le rotor 64 comporte ainsi dix lumières 66A de dépoussiérage qui sont réparties régulièrement autour d'un même tronçon du rotor 64. Les dix lumières 66A de dépoussiérage sont plus particulièrement identique de manière que le tronçon de rotor 64 les contenant présente une symétrie de rotation autour de l'axe "Z1" central.

En variante, chaque lumière 66A de dépoussiérage peut alimenter un autre nombre de tubes 54 d'insufflation, par exemple un, deux, trois ou plus.

Une chambre 70A de distribution du gaz de dépoussiérage est interposée radialement entre le stator 62 et le rotor 64 au niveau de la lumière 66A de dépoussiérage. Ainsi, la lumière 66A de dépoussiérage est susceptible de déboucher dans la chambre 70A de distribution par une ouverture 71A interne sur au moins un premier secteur angulaire de sa trajectoire circulaire, dit "secteur 72-ON angulaire actif'.

La chambre 70A de distribution s'étend sur une hauteur "H" verticale qui est sensiblement égale ou légèrement supérieure à la hauteur de l'ouverture 71A interne de la lumière 66A de dépoussiérage. Dans le mode de réalisation représenté aux figures, l'ouverture 71A interne de la lumière 66A de dépoussiérage présente une section circulaire. La hauteur "H" de la chambre 70A de distribution est ici légèrement supérieure au diamètre de l'ouverture 71A interne.

L'étanchéité de la chambre 70A de distribution est assurée verticalement dans les deux sens par deux bagues 84 intercalaires qui sont interposées radialement entre le rotor 64 et le stator 62. Les bagues 84 intercalaires sont ici montées fixes par rapport au stator 62 et glissants par rapport au rotor 64.

Chaque bague 84 intercalaire est ici réalisée en un matériau métallique. Un joint 85A intérieur annulaire d'étanchéités en matériau élastomères est intercalé radialement entre le stator 62 et la bague 84 intercalaire, d'une part, et un joint 85B extérieur annulaire d'étanchéité est intercalé radialement entre le rotor 64 et la bague 84 intercalaire, d'autre part. Le joint 85B extérieur d'étanchéité est en appui radial glissant sur la face cylindrique externe de la bague 84 intercalaire. Les faces cylindriques interne et externe de la bague 84 intercalaire présentent un état de surface suffisamment lisse pour garantir verticalement l'étanchéité de la chambre 70A de distribution.

Le premier étage 60A de dépoussiérage comporte ainsi les lumières 66A de dépoussiérage et la chambre 70A de distribution.

Le noyau 86 du stator 62 comporte une canalisation 74 d'alimentation en gaz de dépoussiérage qui alimente la chambre 70A de distribution du gaz de dépoussiérage. La canalisation 74 d'alimentation en gaz de dépoussiérage relie plus particulièrement au moins un orifice 76 amont formé dans une face 78 d'extrémité axiale, ici supérieure, du stator 62 à au moins un orifice 80 aval qui débouche dans la chambre 70A de distribution. A titre d'exemple, le stator 62 comporte ici un unique orifice 76 amont et un unique orifice 80 aval. La canalisation 74 d'alimentation en gaz de dépoussiérage est ici formée d'une unique conduite coudée qui comporte un tronçon globalement vertical qui est raccordée à l'orifice 76 amont, et un tronçon radial qui est raccordé à l'orifice 80 aval.

Pour permettre d'utiliser le gaz de dépoussiérage comprimé à bon escient, il est prévu d'interrompre l'alimentation des tubes 54 d'insufflation sur au moins un secteur angulaire de leur trajectoire, dit "secteur 72-OFF angulaire inactif". La trajectoire circulaire de la lumière 66A de dépoussiérage est ici divisée en deux secteurs angulaires complémentaires comprenant un unique secteur 72-ON angulaire actif et un unique secteur 72-OFF angulaire inactif. Par exemple, le secteur 72-ON angulaire actif coïncide au moins avec la totalité du secteur "S2" angulaire inséré.

Selon l'exemple illustré aux figures, le secteur 72-ON angulaire actif s'étend sur tout le secteur "S2" angulaire inséré et sur au moins une partie du secteur "S3" angulaire d'escamotage, tandis que le secteur 72-OFF angulaire inactif s'étend sur la partie complémentaire du secteur "S3" angulaire d'escamotage, sur le secteur "S0" angulaire escamoté et sur le secteur "S1" angulaire d'insertion. Ainsi, le secteur 72-ON angulaire actif s'étend par exemple sur environ 145°, à compter du début du secteur "S2" angulaire inséré, tandis que le secteur 72-OFF angulaire inactif s'étend sur la partie complémentaire de la trajectoire, soit environ 215°.

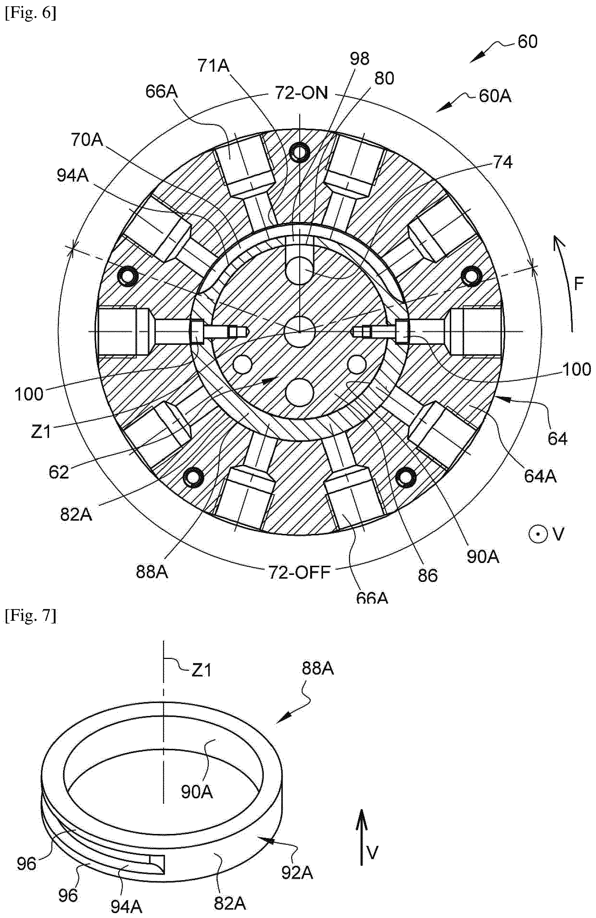

Pour réaliser cette alimentation par secteur des tubes 54 d'insufflation de manière simple et peu onéreuse, le stator 62 comporte ici une face 82A d'obturation fixe qui obture chaque lumière 66A de dépoussiérage sur le secteur 72-OFF angulaire inactif de leur trajectoire circulaire, comme représenté à la figure 6. A cet effet, la face 82A d'obturation présente une forme de segment cylindrique qui s'étend circonférentiellement sur ledit secteur 72-OFF angulaire inactif autour de l'axe "Z1" central du stator 62, tandis que la chambre 70A de distribution s'étend sur le secteur 72-ON angulaire actif.

Un jeu radial fonctionnel est réservé entre la face 82A d'obturation et le rotor 64 pour permettre la rotation du rotor 64 sans frottement. Cependant, ce jeu est suffisamment faible pour que le débit de gaz de dépoussiérage susceptible d'atteindre les lumières 66A de dépoussiérage obturées par la face 82A d'obturation soit négligeable.

Le stator 62 comporte en outre un élément rapporté et fixé sur le noyau 86 qui comporte la face 82A d'obturation. L'élément rapporté est ici formé par une bague, dite bague 88A de dépoussiérage, qui est interposée radialement entre le noyau 86 du stator 62 et le rotor 64. Comme représentée à la figure 7, la bague 88A de dépoussiérage est délimitée verticalement par une face supérieure annulaire plane et par une face inférieure annulaire plane et elle est délimitée radialement par une face 90A cylindrique interne et par une face 92A cylindrique externe.

La bague 88A de dépoussiérage est reçue de manière ajustée autour du noyau 86. Avantageusement, la bague 88A de dépoussiérage n'est pas reçue serrée autour du noyau 86, mais avec un jeu radial permettant son coulissement vertical pour permettre son montage et son démontage de manière aisée.

La chambre 70A de distribution est ici délimitée radialement entre un segment de la face externe de la bague 88A de dépoussiérage et le rotor 64. A cet effet, la face 92A externe comporte, sur ledit segment, un logement 94A concave. Le reste de la face 92A externe présente une surface cylindrique lisse formant la face 82A d'obturation. Le logement 94A concave est par exemple délimité verticalement par deux rebords 96.

En variante, le logement concave s'étend sur toute la hauteur de la bague de dépoussiérage.

La bague 88A de dépoussiérage est destinée à être fixée autour du noyau 86 à hauteur des lumières 66A de dépoussiérage et à hauteur de l'orifice 80 aval de la canalisation 74 d'alimentation en gaz de dépoussiérage. La bague 88A de dépoussiérage est traversée radialement d'un conduit 98 qui permet de faire communiquer l'orifice 80 aval avec l'intérieur de la chambre 70A de distribution. Le conduit est ici agencé au milieu du logement dans le sens circonférentiel.

La bague 88A de dépoussiérage est montée de manière interchangeable sur le noyau 86 de manière à pouvoir régler l'étendue du secteur 72-OFF angulaire inactif en remplaçant la bague 88A de dépoussiérage actuelle par une bague 88A de dépoussiérage de remplacement présentant une face 82A d'obturation s'étendant sur un secteur angulaire différent.

La bague 88A de dépoussiérage est par exemple fixée au noyau 86 par l'intermédiaire de vis 100 de fixation radiales, ici au nombre de deux, comme représenté à la figure 6.

En variante non représentée, la bague de dépoussiérage est par exemple solidarisée en rotation avec le noyau par des moyens par emboîtement vertical de forme complémentaire tels qu'un méplat ou des cannelures. La bague de dépoussiérage est ensuite immobilisée verticalement au moyen des bagues intercalaires qui sont elles-mêmes fixées au noyau, par exemple par des rondelles élastiques de type "circlips".

La bague 88A de dépoussiérage est ici réalisée en un matériau plastique rigide. La bague 88A de dépoussiérage est par exemple réalisée par moulage.

En variante, la bague 88A de dépoussiérage est réalisée en un matériau métallique.

Pour des raisons de sécurité, le dispositif 20 de dépoussiérage est susceptible de fonctionner selon un mode sécurisé dans lequel tous les vérins 56 pneumatiques sont commandés rapidement et simultanément dans leur position extrême escamotée en cas de dysfonctionnement du dispositif 20 de dépoussiérage afin d'éviter que les tubes 54 d'insufflation n'entrent en collision avec d'autres éléments, tels que des préformes 22.

Lorsque le dispositif 20 de dépoussiérage est muni de vérins 56 pneumatiques dans lesquels il est nécessaire d'alimenter la deuxième chambre 106 de travail associée du vérin 56 pneumatique en gaz de travail pour commander les tubes 54 d'insufflation en position extrême escamotée, comme c'est le cas des exemples représentés aux figures, le distributeur 60 fluidique tournant comporte un quatrième étage 60D de sécurité. Cet étage 60D de sécurité fonctionne comme un raccord tournant qui alimente simultanément tous les vérins 56 pneumatique en gaz de travail pour les commander vers leur position extrême escamotée.

L'étage 60D de sécurité est ici agencé à l'extrémité inférieure du distributeur 60 fluidique tournant.

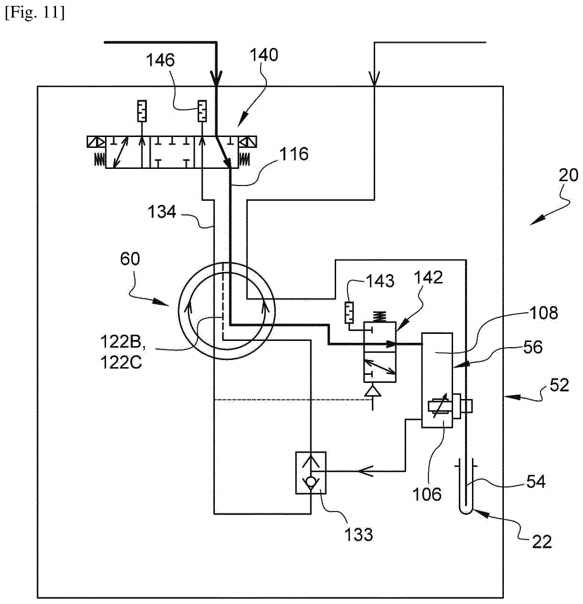

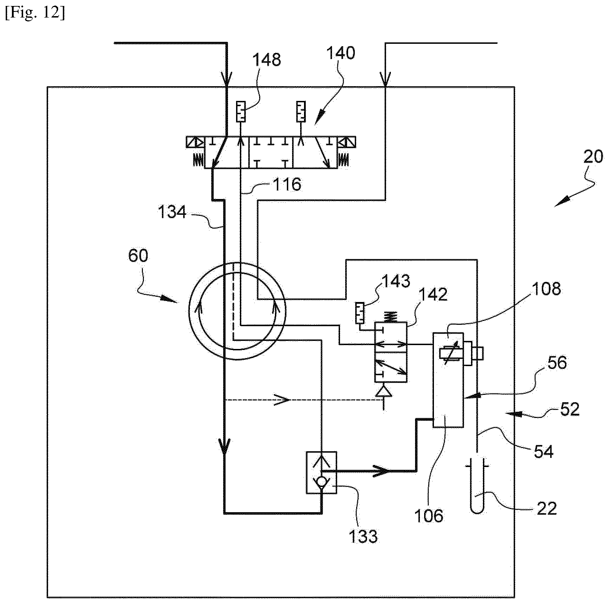

Pour former l'étage 60D de sécurité, le rotor 64 comporte autant de lumières 66D de sécurité le traversant radialement que le dispositif 20 de dépoussiérage comporte de vérins 56 pneumatique. Chaque lumière 66D de sécurité est raccordée à la deuxième chambre 106 de travail associée. Chaque lumière 66D de sécurité parcourt ainsi une trajectoire circulaire autour de l'axe "Z1" central. Comme représenté aux figures 11 et 12, le raccordement à la deuxième chambre 106 de travail est réalisé par l'intermédiaire d'un sélecteur 133 de circuit qui permet de raccorder la deuxième chambre 106 de travail alternativement à la lumière 66D de sécurité ou à la lumière 66C d'actionnement du deuxième étage 60C de pilotage associé.

Le rotor 64 comporte ainsi dix lumières 66D de sécurité qui sont agencées au même niveau et qui sont réparties régulièrement autour d'un même tronçon du rotor 64. Les dix lumières 66D de sécurité sont plus particulièrement identiques de manière que le tronçon de rotor 64 les contenant présente une symétrie de rotation autour de l'axe "Z1" central.

Chaque lumière 66D de sécurité est ici alignée verticalement sur une même ligne avec la lumière 66A de dépoussiérage associée au même poste 52 de dépoussiérage.

Une chambre 70D de sécurité est interposée radialement entre le stator 62 et le rotor 64 au niveau des lumières 66D de sécurité. La chambre 70D de sécurité présente une forme annulaire qui fait tout le tour du stator 62. Ainsi, chaque lumière 66D de sécurité débouche par une ouverture 71D interne en permanence dans la chambre 70D de sécurité sur toute sa trajectoire circulaire. La chambre 70D de sécurité est ici délimitée radialement directement par le noyau 86 vers l'intérieur et directement par le rotor 64 vers l'extérieur.

La chambre 70D de sécurité s'étend sur une hauteur verticale qui est sensiblement égale ou légèrement supérieure à la hauteur de l'ouverture 71D interne de la lumière 66D de sécurité. Dans le mode de réalisation représenté aux figures, l'ouverture 71D interne de la lumière 66D de sécurité présente une section circulaire. La hauteur de la chambre 70D de sécurité est ici légèrement supérieure au diamètre de l'ouverture 71D interne.

Le noyau 86 du stator 62 comporte une canalisation 134 de sécurité pour l'alimentation en gaz de travail de la chambre 70D de sécurité en gaz de travail. La canalisation 134 de sécurité relie plus particulièrement au moins un orifice 136 amont formé dans une face 78 d'extrémité, ici supérieure, du stator 62 à au moins un orifice 138 aval qui débouche dans la chambre 70D de sécurité. A titre d'exemple, le stator 62 comporte ici un unique orifice 136 amont et un unique orifice 138 aval. La canalisation 134 de sécurité est ici formée d'une unique conduite coudée qui comporte un tronçon globalement vertical qui est raccordée à l'orifice 136 amont, et un tronçon radial qui est raccordé à l'orifice 138 aval. La canalisation 134 de sécurité est ici indépendante de la canalisation 116 de pression, c'est-à-dire que les deux canalisations 116, 134 ne communiquent pas entre elles.

Cette canalisation 134 de sécurité est alimentée en gaz de travail de manière commandé au moyen d'un distributeur 140 amont qui alimente alternativement la canalisation 116 de pression ou la canalisation 134 de sécurité. Le distributeur 140 est agencé en amont du distributeur 60 fluidique tournant. Ce distributeur 140 amont présente ici trois positions. Dans une première position normale, représentée à la figure 11 et correspondant au mode normal, il alimente la canalisation 116 de pression en gaz de travail, tandis que la canalisation 134 de sécurité est obturée. Dans une position de sécurité, illustrée à la figure 12 et correspondant au mode sécurisé, il alimente la canalisation 134 de sécurité en gaz de travail, tandis que la canalisation 116 de pression est obturée. Dans une position neutre (non représentée), correspondant à l'arrêt total du dispositif 20 de dépoussiérage, aucune des deux canalisations n'est alimentée en gaz de travail.

La canalisation 134 de sécurité et la canalisation 116 de pression sont ici alimentées par une même source de gaz de travail par l'intermédiaire du distributeur 140 amont. La source de gaz de dépoussiérage est ici distincte de la source de gaz de travail.

En outre, en mode sécurisé, il faut que le gaz de travail contenu dans la première chambre 108 de travail du vérin 56 pneumatique puisse être évacué par un échappement en permanence. A cet effet, la première chambre 108 de travail est raccordée à un distributeur 142 aval, ici du type distributeur à tiroir, qui est commandé entre une position de fonctionnement normal, illustrée à la figure 11, et une position de sécurité, illustrée à la figure 12. Le distributeur 142 aval est donc embarqué sur le carrousel 32. Le distributeur 142 aval permet de raccorder alternativement la première chambre 108 de travail soit à la lumière 66B d'actionnement associée, en mode normal, soit à un échappement 143 embarqué sur le carrousel 32, en mode sécurisé.

Le tiroir du distributeur 142 aval est ici rappelé élastiquement dans sa position de fonctionnement normal. Pour commander automatiquement le distributeur 142 aval dans sa position de sécurité, le tiroir du distributeur 142 aval est actionné par le gaz de travail au moyen d'une conduite raccordant la chambre 70D de sécurité au distributeur 142 aval, par exemple au moyen d'un actionneur (non représenté) tel qu'un piston ou une bobine électrique. Le gaz de travail pousse ainsi le tiroir vers sa position de fonctionnement sécurisé à l'encontre de l'effort de rappel élastique.

A cet effet, le rotor 64 comporte des orifices 144 de déclenchement qui sont agencés au même niveau que les lumières 66D de sécurité et en alternance avec eux autour de l'étage 60D de sécurité du rotor 64. Chaque orifice 144 de déclenchement est raccordé au vérin d'un distributeur 142 aval associé.

Lorsque le dispositif 20 de dépoussiérage fonctionne en mode normal, le distributeur 140 amont occupe sa position normale. La chambre 70D de sécurité est alors reliée à un échappement 146 situé en amont du distributeur 140 amont, tandis que les chambre 70B-1 et 70C-1 de pression des étages 60B, 60C de pilotage sont alimentées en gaz de travail comprimé. Le sélecteur 133 de circuit est commandé pour raccorder la deuxième chambre 106 de travail du vérin 56 pneumatique à la lumière 66C d'actionnement du deuxième étage 60C de pilotage associé. Le distributeur 142 aval occupe sa position normale dans laquelle la première chambre 108 de travail du vérin 56 pneumatique est raccordée à la lumière 66B d'actionnement de du premier étage 60B de pilotage associé.

Comme représenté sur la figure 12, lorsque le dispositif 20 de dépoussiérage fonctionne en mode sécurisé, le distributeur 140 amont occupe sa position de sécurité. La chambre 70D de sécurité est alors alimentées en gaz de travail comprimé, tandis que les chambre 70B-1 et 70C-1 de pression des étages 60B, 60C de pilotage sont reliée à un échappement 148 situé en amont du distributeur 140 amont. Le sélecteur 133 de circuit est commandé pour raccorder la deuxième chambre 106 de travail du vérin 56 pneumatique à la lumière 66D de sécurité de l'étage 60D de sécurité. Le distributeur 142 aval occupe sa position de sécurité dans laquelle la première chambre 108 de travail du vérin 56 pneumatique est raccordée à l'échappement 143.

Lors du montage du distributeur 60 fluidique tournant, la bague 88A de dépoussiérage et les bagues 88B, 88C de pilotages sont insérées verticalement autour du noyau 86 et empilées avec intercalage vertical des bagues 85 intercalaires. Cet empilement est ici en appui vers le haut contre un épaulement du noyau avec intercalage d'une autre bague 85 intercalaire entre la bague 88A de dépoussiérage et l'épaulement. Cet empilement est ensuite maintenu en place par un anneau élastique.

La chambre 70D est formée au moyen d'une dernière bague intercalaire qui est enfilée autour du noyau et fixée à distance verticale de la bague 85 intercalaire d'extrémité inférieure de l'empilement.

La bague 88A de dépoussiérage et les bagues 88B, 88C sont ensuite solidarisées en rotation avec le noyau 86 par leurs vis 100, 132 respectives.

Le rotor 64 est ensuite enfilé autour du stator 62 ainsi formé avec interposition des paliers 65 de roulement.

Pour permettre de simplifier le montage du distributeur 60 fluidique tournant, et éventuellement de pouvoir l'adapter indifféremment à des dispositifs 20 de dépoussiérage à vérin simple action, à vérin double action, le rotor 64 comporte est réalisé en plusieurs manchons 64A, 64B, 64D rapportés correspondant chacun à un tronçon du rotor 64. Ainsi, un premier manchon 64A de rotor 64 comportant toutes les lumières 66A de dépoussiérage est utilisé pour réaliser l'étage 60A de dépoussiérage. Ici, un unique manchon 64B de rotor 64 comportant toutes les lumières 66B et 66C d'actionnement est ici commun aux deux étages 60B, 60C de pilotage. Enfin, un dernier manchon 64D de rotor 64 comportant toutes les lumières 66D de sécurité et les orifices 144 de déclenchement est utilisé pour réaliser l'étage 60D de sécurité. Tous les manchons 64A, 64B, 64D de rotor 64 sont ici empilés et maintenus serrés verticalement ensemble par au moins un tire-fond 150 vertical.

L'invention permet ainsi de commander de manière simple les vérins 56 pneumatique par l'intermédiaire d'un distributeur 60 fluidique tournant.

De plus, en agençant les chambres de pression et d'échappement sur un même étage de pilotage du distributeur fluidique tournant, il est possible de réduire son encombrement vertical.

## Revendications

1. Dispositif (20) de dépoussiérage de l'intérieur de préformes (22) en matière thermoplastique par insufflation de gaz de dépoussiérage qui comporte :
- un carrousel (32) monté rotatif autour d'un axe (Z1) central de rotation sur un socle (34) fixe, le carrousel (32) embarquant des organes (38) de maintien de préformes (22) ;
- des tubes (54) d'insufflation dont chacun est monté coulissant sur le carrousel (32) en correspondance avec chaque organe (38) de maintien entre une position extrême escamotée, et une position extrême insérée à l'intérieur d'une préforme (22) destinée à être portée par l'organe (38) de maintien associé ;
- au moins un vérin (56) pneumatique pour commander au moins un tube (54) d'insufflation entre ses deux positions extrêmes et qui est piloté automatiquement en fonction de la position angulaire du carrousel (32), le vérin (56) pneumatique comportant au moins une première chambre (108) de travail pour la commande du tube (54) d'insufflation dans une première de ses positions extrêmes ;
**caractérisé en ce que** le dispositif (20) de dépoussiérage comporte un distributeur (60) fluidique tournant qui comporte :
- un stator (62) interne qui est monté fixe par rapport au socle (34), et qui comporte une canalisation (116) de pression raccordée à une source de gaz de travail et au moins une canalisation (122B) de mise à l'échappement ;
- un rotor (64) externe qui est monté rotatif autour du stator (62) coaxialement à l'axe (Z1) central de manière solidaire avec le carrousel (32) et qui comporte au moins une première lumière (66B) d'actionnement qui est raccordée à la première chambre (108) de travail, la lumière (66B) d'actionnement parcourant une trajectoire circulaire autour de l'axe central ;
- un premier étage (60B) de pilotage relié à la première chambre (108) de travail du vérin (56) comportant :
-- une chambre (70B-1) de pression qui est interposée radialement entre le stator (62) et le rotor (64), et qui est raccordée à la canalisation (116) de pression, la lumière (66B) d'actionnement débouchant dans la chambre (70B-1) de pression sur au moins un premier secteur angulaire de sa trajectoire circulaire, dit "secteur (112B-IN) angulaire d'actionnement" ;
-- une chambre (70B-2) d'échappement qui est interposée radialement entre le stator (62) et le rotor (64), et qui est raccordée à la canalisation (122B) d'échappement, la lumière (66B) d'actionnement débouchant dans la chambre (70B-2) d'échappement sur au moins un deuxième secteur angulaire de sa trajectoire circulaire, dit "secteur (112B-OUT) angulaire d'échappement" ;
-- des parois (114B) radiales de séparation de la chambre (70B-1) de pression et de la chambre (70B-2) d'échappement.

2. Dispositif (20) selon la revendication précédente, **caractérisé en ce que** le stator (62) comporte un noyau (86) qui est équipé de la canalisation (116) de pression et de la canalisation (122B) d'échappement, et une bague (88B) de pilotage qui est interposée entre le noyau (86) et le rotor (64) et qui est fixée sur le noyau (86), la bague (88B) de pilotage comportant les parois (114B) radiales de séparation.

3. Dispositif (20) selon la revendication précédente, **caractérisé en ce qu'**une des deux chambres (70B-1, 70B-2) de pression ou d'échappement, dite chambre (70B-1) externe, est délimitée radialement entre un premier segment de face (92B) cylindrique externe de la bague (88B) et le rotor (64).

4. Dispositif (20) selon la revendication précédente, **caractérisé en ce que** la chambre (70B-1) externe est délimitée axialement par deux rebords (96) de la bague (88B) de pilotage.

5. Dispositif (20) selon l'une quelconque des revendications 2 à 4, **caractérisé en ce qu'**une des deux chambres (70B-1, 70B-2), dite chambre (70B-2) interne, est délimitée radialement entre un deuxième segment de face (90B) cylindrique interne de la bague (88B) de pilotage et le noyau (86), le segment de face (90B) cylindrique interne étant équipé d'une pluralité d'orifices (128B) traversants répartis sur sa longueur à hauteur de la lumière (66B) d'actionnement pour faire communiquer la chambre (70B-2) interne avec la lumière (66B) d'actionnement.

6. Dispositif (20) selon la revendication précédente prise en combinaison avec l'une quelconque des revendications 3 ou 4, **caractérisé en ce que** la chambre (70B-2) interne forme la chambre (70B-2) d'échappement, tandis que la chambre (70B-1) externe forme la chambre (70B-1) de pression.

7. Dispositif (20) selon l'une quelconque des revendications précédentes, **caractérisé en ce que** le vérin (56) pneumatique est un vérin à double action qui comporte une deuxième chambre (106) de travail pour commander le tube (54) d'insufflation dans une deuxième de ses positions extrêmes, le rotor (64) comportant au moins une deuxième lumière (66C) d'actionnement qui est raccordée à la deuxième chambre (106) de travail, la deuxième lumière (66C) d'actionnement étant décalée axialement par rapport à la première lumière (66B) d'actionnement, le distributeur (60) fluidique tournant comportant un deuxième étage (60C) de pilotage relié à la deuxième chambre (106) de travail du vérin (56) pneumatique comportant :
-- une chambre (70C-1) de pression qui est interposée radialement entre le stator (62) et le rotor (64), et qui est raccordée à la canalisation (116) de pression, la deuxième lumière (66C) d'actionnement débouchant dans la chambre (70C-1) de pression sur au moins un premier secteur angulaire de sa trajectoire circulaire, dit "secteur (112C-IN) angulaire d'actionnement" ;
-- une chambre (70C-2) d'échappement qui est interposée radialement entre le stator (62) et le rotor (64), et qui est raccordée à la canalisation (122C) d'échappement, la deuxième lumière (66C) d'actionnement débouchant dans la chambre (70C-2) d'échappement sur au moins un deuxième secteur angulaire de sa trajectoire circulaire, dit "secteur (112C-OUT) angulaire d'échappement" ;
-- des parois (114C) radiales de séparation de la chambre (70C-1) de pression et de la chambre (70C-2) d'échappement.

8. Dispositif (20) selon la revendication précédente, **caractérisé en ce que** le deuxième étage (60C) de pilotage pilotage comporte une bague (88C) de pilotage réalisée selon l'une quelconque des revendications 2 à 6.

9. Dispositif (20) selon l'une quelconque des revendications précédentes, **caractérisé en ce que** la chambre (70B-2) d'échappement du premier étage (60B) de pilotage s'étend en coïncidence avec la chambre (70C-1) de pression du deuxième étage (60C) de pilotage, tandis que la chambre (70B-1) de pression du premier étage (60B) de pilotage s'étend en coïncidence avec la chambre (70C-2) d'échappement du deuxième étage (60C) de pilotage.

10. Dispositif (20) selon l'une quelconque des revendications précédentes, **caractérisé en ce que** chaque bague (88B, 88C) de pilotage est montée de manière remplaçable de manière à pouvoir régler l'étendue angulaire des chambres (70B-1, 70B-2, 70C-1, 70C-2) en changeant la bague (88B, 88C) de pilotage.

## Patentansprüche

1. Vorrichtung (20) zum Entstauben des Inneren von Vorformlingen (22) aus thermoplastischem Material durch Einblasen von Entstaubungsgas, die Folgendes aufweist:
- ein Karussell (32), das um eine mittlere Drehachse (Z1) drehbar auf einem festen Sockel (34) angebracht ist, wobei das Karussell (32) Organe (38) zum Halten von Vorformlingen (22) enthält;
- Einblasrohre (54), von denen jedes auf dem Karussell (32) in Entsprechung mit jedem Halteorgan (38) zwischen einer ausgefahrenen Endposition und einer Endposition gleitend gelagert ist, die ins Innere eines Vorformlings (22) eingeführt ist, der dazu bestimmt ist, vom zugehörigen Halteorgan (38) getragen zu werden;
- wenigstens einen Pneumatikzylinder (56) zur Steuerung wenigstens eines Einblasrohrs (54) zwischen seinen zwei Endpositionen, der automatisch je nach der Winkelposition des Karussells (32) gesteuert wird, wobei der Pneumatikzylinder (56) wenigstens eine erste Arbeitskammer (108) zur Steuerung des Einblasrohrs (54) in eine erste von dessen Endpositionen aufweist;
**dadurch gekennzeichnet, dass** die Entstaubungsvorrichtung (20) einen drehbaren Fluidverteiler (60) aufweist, der Folgendes aufweist:
- einen inneren Stator (62), der bezogen auf den Sockel (34) fest angebracht ist und einen Druckkanal (116), der an eine Arbeitsgasquelle angeschlossen ist, und wenigstens einen Auslasskanal (122B) aufweist;
- einen äußeren Rotor (64), der um den Stator (62) koaxial zur Mittelachse (Z1) drehbar mit dem Karussell (32) fest verbunden angebracht ist und wenigstens einen ersten Betätigungsdurchlass (66B) aufweist, der an die erste Arbeitskammer (108) angeschlossen ist, wobei der Betätigungsdurchlass (66B) eine Kreisbahn um die Mittelachse zurücklegt;
- eine erste Steuerungsstufe (60B), die mit der ersten Arbeitskammer (108) des Zylinders (56) verbunden ist, aufweisend:
-- eine Druckkammer (70B-1), die radial zwischen dem Stator (62) und dem Rotor (64) angeordnet ist und an den Druckkanal (116) angeschlossen ist, wobei der Betätigungsdurchlass (66B) auf wenigstens einem ersten Winkelabschnitt seiner Kreisbahn, dem "Betätigungswinkelabschnitt (112B-IN)", in die Druckkammer (70B-1) mündet;
-- eine Auslasskammer (70B-2), die radial zwischen dem Stator (62) und dem Rotor (64) angeordnet ist und an den Auslasskanal (122B) angeschlossen ist, wobei der Betätigungsdurchlass (66B) auf wenigstens einem zweiten Winkelabschnitt seiner Kreisbahn, dem "Auslasswinkelabschnitt (112B-OUT)", in die Auslasskammer (70B-2) mündet;
-- radiale Wände (114B) zur Trennung der Druckkammer (70B-1) und der Auslasskammer (70B-2).

2. Vorrichtung (20) nach dem vorhergehenden Anspruch, **dadurch gekennzeichnet, dass** der Stator (62) einen Kern (86), der mit dem Druckkanal (116) und dem Auslasskanal (122B) versehen ist, und einen Steuerring (88B) aufweist, der zwischen dem Kern (86) und dem Rotor (64) angeordnet und auf dem Kern (86) befestigt ist, wobei der Steuerring (88B) radiale Trennwände (114B) aufweist.

3. Vorrichtung (20) nach dem vorhergehenden Anspruch, **dadurch gekennzeichnet, dass** eine der zwei Kammern (70B-1, 70B-2), die Druck- oder Auslasskammer, äußere Kammer (70B-1) genannt, radial zwischen einem ersten Segment einer äußeren zylindrischen Fläche (92B) des Rings (88B) und dem Rotor (64) begrenzt ist.

4. Vorrichtung (20) nach dem vorhergehenden Anspruch, **dadurch gekennzeichnet, dass** die äußere Kammer (70B-1) axial von zwei Kanten (96) des Steuerrings (88B) begrenzt ist.

5. Vorrichtung (20) nach einem der Ansprüche 2 bis 4, **dadurch gekennzeichnet, dass** eine der zwei Kammern (70B-1, 70B-2), die innere Kammer (70B-2), radial zwischen einem zweiten Segment einer inneren zylindrischen Fläche (90B) des Steuerrings (88B) und dem Kern (86) begrenzt ist, wobei das Segment der inneren zylindrischen Fläche (90B) mit einer Mehrzahl von Durchgangsöffnungen (128B) versehen ist, die über deren Länge auf Höhe des Betätigungsdurchlasses (66B) verteilt sind, damit die innere Kammer (70B-2) mit dem Betätigungsdurchlass (66B) in Verbindung steht.

6. Vorrichtung (20) nach dem vorhergehenden Anspruch in Kombination mit einem der Ansprüche 3 oder 4, **dadurch gekennzeichnet, dass** die innere Kammer (70B-2) die Auslasskammer (70B-2) bildet, während die äußere Kammer (70B-1) die Druckkammer (70B-1) bildet.

7. Vorrichtung (20) nach einem der vorhergehenden Ansprüche, **dadurch gekennzeichnet, dass** der Pneumatikzylinder (56) ein doppelt wirkender Zylinder ist, der eine zweite Arbeitskammer (106) zur Steuerung des Einblasrohrs (54) in eine zweite von dessen Endpositionen aufweist, wobei der Rotor (64) wenigstens einen zweiten Betätigungsdurchlass (66C) aufweist, der an die zweite Arbeitskammer (106) angeschlossen ist, wobei der zweite Betätigungsdurchlass (66C) bezogen auf den ersten Betätigungsdurchlass (66B) axial versetzt ist, wobei der drehbare Fluidverteiler (60) eine zweite Steuerungsstufe (60C) aufweist, die mit der zweiten Arbeitskammer (106) des Pneumatikzylinders (56) verbunden ist, aufweisend:
-- eine Druckkammer (70C-1), die radial zwischen dem Stator (62) und dem Rotor (64) angeordnet ist und an den Druckkanal (116) angeschlossen ist, wobei der zweite Betätigungsdurchlass (66C) auf wenigstens einem ersten Winkelabschnitt seiner Kreisbahn, dem "Betätigungswinkelabschnitt (112C-IN)", in die Druckkammer (70C-1) mündet;
-- eine Auslasskammer (70C-2), die radial zwischen dem Stator (62) und dem Rotor (64) angeordnet ist und an den Auslasskanal (122C) angeschlossen ist, wobei der zweite Betätigungsdurchlass (66C) auf wenigstens einem zweiten Winkelabschnitt seiner Kreisbahn, dem "Auslasswinkelabschnitt (112C-OUT)", in die Auslasskammer (70C-2) mündet;
-- radiale Wände (114C) zur Trennung der Druckkammer (70C-1) und der Auslasskammer (70C-2).

8. Vorrichtung (20) nach dem vorhergehenden Anspruch, **dadurch gekennzeichnet, dass** die zweite Steuerungsstufe (60C) einen Steuerring (88C) aufweist, der nach einem der Ansprüche 2 bis 6 ausgebildet ist.

9. Vorrichtung (20) nach einem der vorhergehenden Ansprüche, **dadurch gekennzeichnet, dass** sich die Auslasskammer (70B-2) der ersten Steuerungsstufe (60B) deckungsgleich mit der Druckkammer (70C-1) der zweiten Steuerungsstufe (60C) erstreckt, während sich die Druckkammer (70B-1) der ersten Steuerungsstufe (60B) deckungsgleich mit der Auslasskammer (70C-2) der zweiten Steuerungsstufe (60C) erstreckt.

10. Vorrichtung (20) nach einem der vorhergehenden Ansprüche, **dadurch gekennzeichnet, dass** jeder Steuerring (88B, 88C) austauschbar angebracht ist, damit die Winkelerstreckung der Kammern (70B-1, 70B-2, 70C-1, 70C-2) durch Wechsel des Steuerrings (88B, 88C) eingestellt werden kann.

## Claims

1. Device (20) for removing dust from the interior of preforms (22) of thermoplastic material by injecting dust removal gas which comprises:
- a carousel (32) which is rotatably mounted about a central rotation axis (Z1) on a fixed base (34), the carousel (32) comprising retention members (38) for preforms (22);
- injection tubes (54), each one of which is mounted in a sliding manner on the carousel (32) in correspondence with each retention member (38) between an extreme retracted position and an extreme inserted position inside a preform (22) which is intended to be carried by the associated retention member (38);
- at least one pneumatic actuator (56) which is for controlling at least one injection tube (54) between the two extreme positions thereof and which is controlled automatically in accordance with the angular position of the carousel (32), the pneumatic actuator (56) comprising at least a first working chamber (108) for controlling the injection tube (54) to move into a first of the extreme positions thereof;
**characterized in that** the dust removal device (20) comprises a rotating fluid distributor (60) which comprises:
- an internal stator (62) which is fixedly mounted relative to the base (34) and which comprises a pressure line (116) which is connected to a working gas source and at least one exhaust line (122B);
- an external rotor (64) which is rotatably mounted about the stator (62) coaxially relative to the center axis (Z1) in a manner fixedly joined to the carousel (32) and which comprises at least a first activation aperture (66B) which is connected to the first working chamber (108), the activation aperture (66B) travelling a circular trajectory around the center axis;
- a first control stage (60B) which is connected to the first working chamber (108) of the actuator (56), comprising:
-- a pressure chamber (70B-1) which is interposed radially between the stator (62) and the rotor (64) and which is connected to the pressure line (116), the activation aperture (66B) opening in the pressure chamber (70B-1) over at least a first angular sector of the circular trajectory thereof, referred to as the "angular activation sector (112B-IN)";
-- an exhaust chamber (70B-2) which is interposed radially between the stator (62) and the rotor (64) and which is connected to the exhaust line (122B), the activation aperture (66B) opening in the exhaust chamber (70B-2) over at least a second angular sector of the circular trajectory thereof, referred to as the "angular exhaust sector (112B-OUT)";
-- radial walls (114B) for separating the pressure chamber (70B-1) and the exhaust chamber (70B-2).

2. Device (20) according to the preceding claim, **characterized in that** the stator (62) comprises a core (86) which is provided with the pressure line (116) and the exhaust line (122B) and a control ring (88B) which is interposed between the core (86) and the rotor (64) and which is fixed to the core (86), the control ring (88B) comprising radial separation walls (114B).

3. Device (20) according to the preceding claim, **characterized in that** one of the two pressure or exhaust chambers (70B-1, 70B-2), referred to as an external chamber (70B-1), is delimited radially between a first external cylindrical face segment (92B) of the ring (88B) and the rotor (64).

4. Device (20) according to the preceding claim, **characterized in that** the external chamber (70B-1) is delimited axially by two edges (96) of the control ring (88B).

5. Device (20) according to any one of Claims 2 to 4, **characterized in that** one of the two chambers (70B-1, 70B-2), referred to as the internal chamber (70B-2), is delimited radially between a second internal cylindrical face segment (90B) of the control ring (88B) and the core (86), the internal cylindrical face segment (90B) being provided with a plurality of through-holes (128B) which are distributed over the length thereof at the height of the activation aperture (66B) in order to make the internal chamber (70B-2) communicate with the activation aperture (66B).

6. Device (20) according to the preceding claim, taken in combination with either Claim 3 or 4, **characterized in that** the internal chamber (70B-2) forms the exhaust chamber (70B-2) whilst the external chamber (70B-1) forms the pressure chamber (70B-1).

7. Device (20) according to any one of the preceding claims, **characterized in that** the pneumatic actuator (56) is a dual-action actuator which comprises a second working chamber (106) for controlling the injection tube (54) to move into a second of the extreme positions thereof, the rotor (64) comprising at least a second activation aperture (66C) which is connected to the second working chamber (106), the second activation aperture (66C) being offset axially relative to the first activation aperture (66B), the rotating fluid distributor (60) comprising a second control stage (60C) which is connected to the second working chamber (106) of the pneumatic actuator (56) comprising:
-- a pressure chamber (70C-1) which is radially interposed between the stator (62) and the rotor (64) and which is connected to the pressure line (116), the second activation aperture (66C) opening in the pressure chamber (70C-1) over at least a first angular sector of the circular trajectory thereof, referred to as the "angular activation sector (112C-IN)";
-- an exhaust chamber (70C-2) which is interposed radially between the stator (62) and the rotor (64) and which is connected to the exhaust line (122C), the second activation aperture (66C) opening in the exhaust chamber (70C-2) over at least a second angular sector of the circular trajectory thereof, referred to as the "angular exhaust sector (112C-OUT)";
-- radial walls (114C) for separating the pressure chamber (70C-1) and the exhaust chamber (70C-2).

8. Device (20) according to the preceding claim, **characterized in that** the second control stage (60C) comprises a control ring (88C) which is produced according to any one of Claims 2 to 6.

9. Device (20) according to any one of the preceding claims, **characterized in that** the exhaust chamber (70B-2) of the first control stage (60B) extends in coincidence with the pressure chamber (70C-1) of the second control stage (60C), whilst the pressure chamber (70B-1) of the first control stage (60B) extends in coincidence with the exhaust chamber (70C-2) of the second control stage (60C).

10. Device (20) according to any one of the preceding claims, **characterized in that** each control ring (88B, 88C) is mounted in a replaceable manner in order to be able to control the angular extent of the chambers (70B-1, 70B-2, 70C-1, 70C-2) by changing the control ring (88B, 88C).
